# EUROPÄISCHE PATENTSCHRIFT

(11) **EP 1 320 447 B1**
(45) Veröffentlichungstag und Bekanntmachung des Hinweises auf die Patenterteilung: **15.04.2009**
(21) Anmeldenummer: 01971686.9
(22) Anmeldetag: 31.08.2001
(51) Int. Cl.: B25D 17/26

(54) **WERKZEUGMASCHINE MIT EINEM RAUM MIT SCHMIERMITTEL UND EINER DRUCKAUSGLEICHSEINRICHTUNG DES RAUMS**
MACHINE TOOL WITH A CHAMBER FOR LUBRICATING AGENT AND A PRESSURE EQUALISATION DEVICE FOR SAID CHAMBER
MACHINE OUTIL COMPRENANT UNE CHAMBRE A LUBRIFIANT ET UN DISPOSITIF DE COMPENSATION DE PRESSION DESTINE A CETTE CHAMBRE

(30) Priorität: 15.09.2000 DE 10045620
(43) Veröffentlichungstag der Anmeldung: 25.06.2003
(73) Patentinhaber: ROBERT BOSCH GMBH, 70442 Stuttgart (DE)
(72) Erfinder: LEBISCH, Helmut, 70565 Stuttgart (DE); BAUMANN, Otto, 70771 Leinfelden-Echterdingen (DE); MUELLER, Rolf, 70771 Leinfelden-Echterdingen (DE); SAUR, Dietmar, 72810 Gomaringen (DE)
(86) Internationale Anmeldenummer: PCT/DE2001/003359
(87) Internationale Veröffentlichungsnummer: WO 2002/022316

(56) Entgegenhaltungen:
- DE-A- 4 231 987
- US-A- 4 497 380

## Beschreibung

### Stand der Technik

Die Erfindung geht aus von einer Werkzeugmaschine mit einem Raum mit Schmiermittel und einer Druckausgleichseinrichtung des Raums nach dem Oberbegriff des Anspruchs 1.

Aus der DE 42 31 987.0 A1 ist eine gattungsbildende Werkzeugmaschine, insbesondere ein handgeführter Bohrhammer, bekannt. Der Bohrhammer besitzt einen in einem Motorraum eines Gehäuses angeordneten Antriebsmotor mit einer Motorwelle, die sich durch ein Gehäuseteil hindurch in einen Getrieberaum erstreckt und dort über ein angeformtes Ritzel mit einem Zahnrad eines Getriebes zum Antrieb einer Werkzeugaufnahme in Eingriff steht. Der Getrieberaum ist mit einer Druckausgleichseinrichtung versehen, die einen im Getrieberaum im Betrieb entstehenden Druck zur Atmosphäre oder zum Motorraum hin abbaut. Die Druckausgleichseinrichtung besitzt einen vom Getrieberaum nach außen bzw. zum Motorraum führenden, als Bohrung ausgeführten Druckausgleichskanal, der in ein Gehäuseteil eingebracht ist.

Der Druckausgleichskanal wird von einem im Getrieberaum auf einem an das Gehäuseteil angeformten Zapfen drehbar gelagerten Rotationselement bzw. Schleuderbauteil abgeschirmt. Das Rotationselement ist von einem topfförmigen Blechteil gebildet, in das ein Durchlaß eingebracht ist. Das Rotationselement steht in Wirkverbindung mit dem über das Ritzel angetriebenen Zahnrad des Getriebes, und zwar über eine Druckfeder, deren Enden an dem Zahnrad einerseits formschlüssig und am Rotationselement anderseits kraftschlüssig angreifen. Die Druckfeder überträgt die Drehbewegung des Zahnrads auf das Rotationselement.

### Vorteile der Erfindung

Die Erfindung geht aus von einer Werkzeugmaschine, insbesondere einem handgeführten Bohrhammer, mit einem Raum mit Schmiermittel, in dem zumindest ein rotierend antreibbares Bauteil angeordnet ist, und mit einer Druckausgleichseinrichtung des Raums, die ein rotierend antreibbares Schleuderbauteil aufweist, das zumindest einen ihm strömungstechnisch in Entlüftungsrichtung des Raums nachgeschalteten Druckausgleichskanal abschirmt, wobei
das Schleuderbauteil auf dem rotierend antreibbaren Bauteil drehfest angeordnet ist.

Zusätzliche, das Schleuderbauteil antreibende Bauteile können vermieden und Bauraum, Gewicht, Montageaufwand und Kosten können durch die kennzeichnenden Merkmale des Anspruchs 1 eingespart werden. Grenzt das Schleuderbauteil an einem auf der Welle angeordneten, sich in radialer Richtung erstreckenden Übersetzungsmittel an, beispielsweise an einem Zahnrad, einem Kegelrad eines stufenlosen Getriebes, einer Keilriemenscheibe usw., werden vorteilhaft mit wenigen zusätzlichen Bauteilen ein großer radialer Abstand zwischen einem äußeren Durchmesser des Schleuderbauteils und dem Druckausgleichskanal erreicht, wodurch eine vorteilhafte Abschirmwirkung erzielbar ist. Ferner ist ein langer Druckausgleichskanal und eine damit verbundene vorteilhafte Labyrinth- und Dichtwirkung mit einer einfachen Konstruktion erreichbar. Grundsätzlich wäre jedoch auch denkbar, daß das Schleuderbauteil an einem vom Übersetzungsmittel getrennten Bauteil angrenzt, wie beispielsweise an einer Zwischenwand eines Gehäuses oder an einem zusätzlich dafür vorgesehenen Bauteil usw.

In einer weiteren Ausgestaltung der Erfindung wird vorgeschlagen, daß das Schleuderbauteil von einer Scheibe gebildet ist, die sich axial zum Übersetzungsmittel konisch radial nach außen erstreckt. Es kann dadurch eine vorteilhafte Abschirmwirkung erzielt werden, und zwar insbesondere wenn das Schleuderbauteil strömungstechnisch in Entlüftungsrichtung des Raums vor dem Übersetzungsmittel angeordnet ist.

Ist im radial äußeren Bereich des als Scheibe ausgebildeten Schleuderbauteils im Schleuderbauteil und/oder im Übersetzungsmittel zumindest eine einen Druckausgleichskanal bildende Ausnehmung eingebracht, kann gezielt ein gewünschter Strömungsquerschnitt einfach eingestellt werden, über den ein Druckausgleich stattfinden soll. Ferner kann sichergestellt werden, daß in einen vom Schleuderbauteil und vom Übersetzungsmittel begrenzten Raum gelangtes Schmiermittel zurückfließen kann. Möglich ist jedoch auch, daß das Schleuderbauteil mit geringem Spiel am Übersetzungsmittel angrenzt, so daß sich zwischen dem Übersetzungsmittel und dem Schleuderbauteil eine Spaltdichtung ausbildet, über die ein Druckausgleich stattfinden kann, die jedoch einen Schmiermittelaustritt aus dem Raum zumindest weitgehend vermeidet.

Ferner ist vorteilhaft der abgeschirmte Druckausgleichskanal zumindest teilweise von einer gewindeförmigen Vertiefung gebildet, die bis auf einen vom Schleuderbauteil abgeschirmten Zugang im Raum schmiermitteldicht abgedeckt ist. Es kann eine vorteilhafte Labyrinthwirkung bzw. Labyrinthdichtung erreicht und zudem kann eine Rückförderwirkung erzielt werden, und zwar indem Gewinderichtung und Drehrichtung entsprechend aufeinander abgestimmt werden. Die gewindeförmige Vertiefung kann in ein oder mehrere auf dem rotierend antreibbaren Bauteil angeordnete Bauteile eingebracht sein, beispielsweise in das Übersetzungsmittel, in einen Lagerring eines Lagers des rotierend antreibbaren Bauteils usw. Vorteilhaft ist jedoch die gewindeförmige Vertiefung in das als Welle ausgebildete rotierend antreibbare Bauteil eingebracht. Die Vertiefung kann in einem Verfahrensgang in einem Bauteil vorteilhaft eingebracht und die Vertiefung kann nach dem Schleuderbauteil vorteilhaft zumindest weitgehendst mit bereits vorhandenen Bauteilen schmiermitteldicht abgedeckt werden. Mündet der Druckausgleichskanal in zumindest einer Ringnut, kann dieser besonders einfach und kostengünstig hergestellt werden, beispielsweise in einem Drehvorgang ausgehend von einer ersten Ringnut und mündend in einer zweiten Ringnut oder an einer Stirnseite.

In einer weiteren Ausgestaltung der Erfindung wird vorgeschlagen, daß zwischen dem Übersetzungsmittel und einem Lager des rotierend antreibbaren Bauteils ein die Vertiefung radial abdichtender Dichtring angeordnet ist. Ausgehend vom Schleuderbauteil kann eine in das als Welle ausgebildete rotierend antreibbare Bauteil eingebrachte gewindeförmige Vertiefung vorteilhaft vom Übersetzungsmittel, vom Dichtring und vom Lager schmiermitteldicht abgedeckt werden. Ferner kann der Dichtring dazu genutzt werden, den Raum im Bereich des Lagers nach außen schmiermitteldicht abzudichten. Insgesamt können bis auf das Schleuderbauteil zusätzliche Bauteile für die Druckausgleichseinrichtung vermieden werden.

Die erfindungsgemäße Lösung kann bei sämtlichen, dem Fachmann als sinnvoll erscheinenden Werkzeugmaschinen eingesetzt werden, insbesondere bei Handwerkzeugmaschinen, wie beispielsweise bei Schleifmaschinen, Sägen, Fräsen, Hobel, Bohrmaschinen, Meißelhämmer usw.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen schematisch dargestellten Bohrhammer von der Seite und
- Fig. 2: einen mit II gekennzeichneten Ausschnitt aus Fig. 1.

### Beschreibung des Ausführungsbeispiels

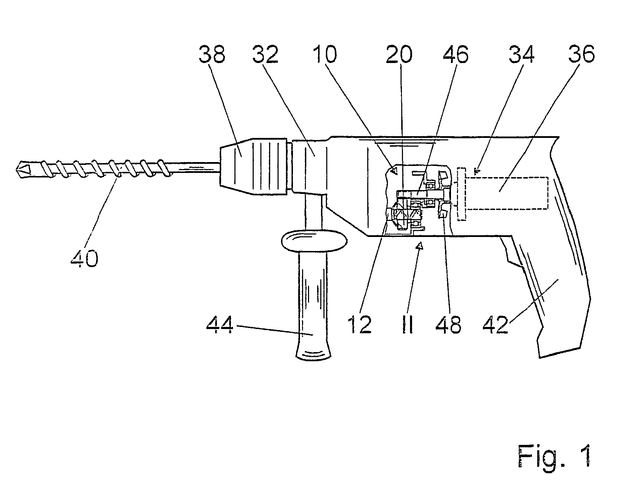

Fig. 1 zeigt einen schematisch dargestellten Bohrhammer mit einem Gehäuse 32, in dem in einem Motorraum 34 ein Antriebsmotor 36 gelagert ist. Mit dem Antriebsmotor 36 ist über ein in einem Getrieberaum 10 angeordnetes, nicht näher dargestelltes Getriebe eine Werkzeughalterung 38 und ein in der Werkzeughalterung 38 befestigter Bohrer 40 drehend und schlagend antreibbar. Der Bohrhammer kann mit zwei, sich im wesentlichen senkrecht zu einer Betätigungsrichtung erstreckenden Handgriffen 42, 44 geführt werden, wobei ein Handgriff 42 an einer dem Bohrer 40 abgewandten Seite an das Gehäuse 32 angeformt ist, und ein Handgriff 44 auf einer dem Bohrer 40 zugewandten Seite am Gehäuse 32 befestigt ist.

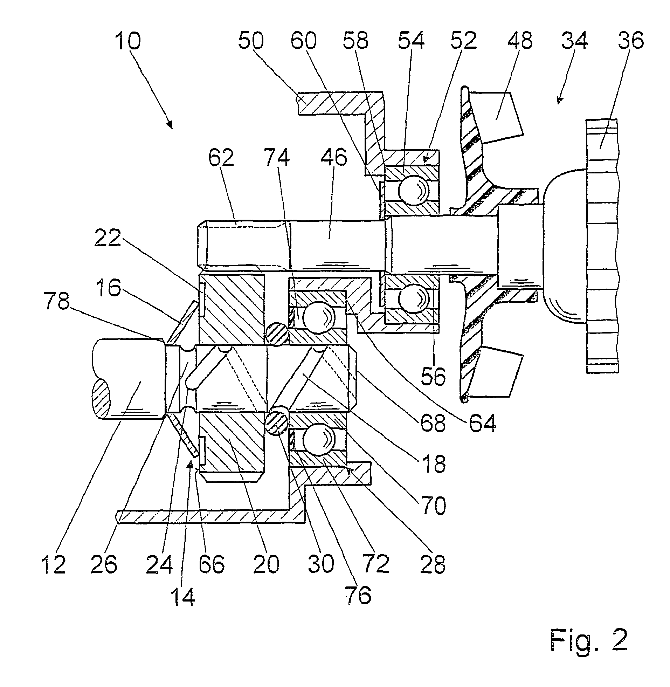

Der Antriebsmotor 36 besitzt eine Antriebswelle 46, auf der im Motorraum 34 ein Lüfterrad 48 drehfest angeordnet ist (Fig. 2). Die Antriebswelle 46 ragt vom Motorraum 34 durch eine Zwischenwand 50 aus Aluminium in den Getrieberaum 10 und ist in der Zwischenwand 50 in einem Kugellager 52 drehbar gelagert. Das Kugellager 52 ist mit seinem Außenring 54 über einen Preßsitz mit der Zwischenwand 50 und ist mit seinem Innenring 56 über einen Preßsitz drehfest mit der Antriebswelle 46 verbunden. Das Kugellager 52 ist als Festlager ausgeführt, und zwar ist dieses axial in Richtung Getrieberaum 10 an einem Absatz 58 in der Zwischenwand 50 und axial in Richtung Motorraum 34 an einem in der Zwischenwand 50 befestigten, nicht näher dargestellten Haltering abgestützt. Der mit Schmiermittel gefüllte Getrieberaum 10 ist am Kugellager 52 über eine Dichtscheibe 60 in Richtung Motorraum 34 luft- und schmiermitteldicht abgedichtet.

An einem in den Getrieberaum 10 ragenden Ende der Antriebswelle 46 ist ein Ritzel 62 angeformt, mit dem die Antriebswelle 46 mit einem auf einer Zwischenwelle 12 des Getriebes drehfest angeordneten Zahnrad 20 kämmt. Die Zwischenwelle 12 ist über ein Kugellager 28 in der Zwischenwand 50 drehbar gelagert. Das Kugellager 28 ist mit seinem Innenring 70 über einen Preßsitz auf der Zwischenwelle 12 und mit seinem Außenring 72 über einen Preßsitz in der Zwischenwand 50 drehfest angeordnet. In axialer Richtung zum Motorraum 34 ist das Kugellager 28 mit seinem Außenring 72 an einem Absatz 64 in der Zwischenwand 50 abgestützt.

Ein Druck im Getrieberaum 10 kann über eine Druckausgleichseinrichtung 14 ausgeglichen werden, und zwar kann insbesondere ein Druckaufbau im Getrieberaum 10 beim Betrieb des Bohrhammers durch Erwärmung vermieden werden. Die Druckausgleichseinrichtung 14 besitzt erfindungsgemäß ein auf der Zwischenwelle 12 drehfest angeordnetes, von einer Blechscheibe gebildetes Schleuderbauteil 16, das strömungstechnisch in Entlüftungsrichtung des Getrieberaums 10 vor dem Zahnrad 20 angeordnet ist, sich axial zum Zahnrad 20 konisch radial nach außen erstreckt und an einer Stirnseite 66 des Zahnrads 20 angrenzt. Das Schleuderbauteil 16 ist in axialer Richtung vorgespannt und stützt sich dabei in Richtung Getrieberaum 10 an einem Absatz 78 auf der Zwischenwelle 12 und in Richtung Motorraum 34 an der Stirnseite 66 des Zahnrads 20 ab. Im radial äußeren Bereich des Schleuderbauteils 16 sind in die Stirnseite 66 des Zahnrads 20 Druckausgleichskanäle bildende Ausnehmungen 22 eingebracht.

Das Schleuderbauteil 16 schirmt einen ihm strömungstechnisch in Entlüftungsrichtung des Getrieberaums 10 nachgeschalteten Druckausgleichskanal 18 ab, der von einer gewindeförmigen, in die Zwischenwelle 12 eingebrachten Vertiefung gebildet ist. Die Vertiefung erstreckt sich in axialer Richtung zum Motorraum 34 ausgehend von einer Ringnut 26 vor dem Zahnrad 20 bis zu einer in den Motorraum 34 ragenden Stirnseite 68 der Zwischenwelle 12. Die Vertiefung ist bis auf einen vom Schleuderbauteil 16 abgeschirmten Zugang 24 im Bereich der Ringnut 26 im Getrieberaum 10 schmiermitteldicht abgedeckt, und zwar vom Zahnrad 20, von einem zwischen dem Zahnrad 20 und dem Kugellager 28 angeordneten Dichtring 30 und vom Innenring 70 des Kugellagers 28. Ein Lagerspalt 74 zwischen dem Innenring 70 und dem Außenring 72 ist über eine Dichtscheibe 76 luft- und schmiermitteldicht abgedichtet.

Anstatt mit einer Zwischenwelle 12 könnte eine entsprechende Druckausgleichseinrichtung auch mit einer Antriebswelle realisiert werden.

### Bezugszeichen

- 10: Raum
- 12: Bauteil
- 14: Druckausgleichseinrichtung
- 16: Schleuderbauteil
- 18: Druckausgleichskanal
- 20: Übersetzungsmittel
- 22: Ausnehmung
- 24: Zugang
- 26: Ringnut
- 28: Lager
- 30: Dichtring
- 32: Gehäuse
- 34: Motorraum
- 36: Antriebsmotor
- 38: Werkzeughalterung
- 40: Bohrer
- 42: Handgriff
- 44: Handgriff
- 46: Antriebswelle
- 48: Lüfterrad
- 50: Zwischenwand
- 52: Kugellager

- 54: Außenring
- 56: Innenring
- 58: Absatz
- 60: Dichtscheibe
- 62: Ritzel
- 64: Absatz
- 66: Stirnseite
- 68: Stirnseite
- 70: Innenring
- 72: Außenring
- 74: Lagerspalt
- 76: Dichtscheibe
- 78: Absatz

## Patentansprüche

1. Werkzeugmaschine, insbesondere handgeführter Bohrhammer, mit einem Raum (10) mit Schmiermittel, in dem zumindest ein rotierend antreibbares Bauteil (12) angeordnet ist, und mit einer Druckausgleichseinrichtung (14) des Raums (10), die ein rotierend antreibbares Schleuderbauteil (16) aufweist, das zumindest einen ihm strömungstechnisch in Entlüftungsrichtung des Raums (10) nachgeschalteten Druckausgleichskanal (18) abschirmt, wobei das Schleuderbauteil (16) auf dem rotierend antreibbaren Bauteil drehfest angeordnet ist, **dadurch gekennzeichnet, daß** das rotierend antreibbare Bauteil (12) von einer Welle gebildet ist, und das Schleuderbauteil (16) an einem auf der Welle angeordneten, sich in radialer Richtung erstreckenden Übersetzungsmittel (20) angrenzt.

2. Werkzeugmaschine nach Anspruch 1, **dadurch gekennzeichnet, daß** das Schleuderbauteil (16) von einer Scheibe gebildet ist, die sich axial zum Übersetzungsmittel (20) konisch radial nach außen erstreckt.

3. Werkzeugmaschine nach Anspruch 1 oder 2, **dadurch gekennzeichnet, daß** das Schleuderbauteil (16) strömungstechnisch in Entlüftungsrichtung des Raums (10) vor dem Übersetzungsmittel (20) angeordnet ist.

4. Werkzeugmaschine nach Anspruch 2 oder 3, **dadurch gekennzeichnet, daß** im radial äußeren Bereich des als Scheibe ausgebildeten Schleuderbauteils (16) im Schleuderbauteil (16) und/oder im Übersetzungsmittel (20) zumindest eine einen Druckausgleichskanal bildende Ausnehmung (22) eingebracht ist.

5. Werkzeugmaschine nach einem der vorhergehenden Ansprüche, **dadurch gekennzeichnet, daß** der Druckausgleichskanal (18) zumindest teilweise von einer gewindeförmigen Vertiefung gebildet ist, die bis auf einen vom Schleuderbauteil (16) abgeschirmten Zugang (24) im Raum (10) schmiermitteldicht abgedeckt ist.

6. Werkzeugmaschine nach Anspruch 5, **dadurch gekennzeichnet, daß** die gewindeförmige Vertiefung in das als Welle ausgebildete rotierend antreibbare Bauteil (12) eingebracht ist.

7. Werkzeugmaschine nach Anspruch 5 oder 6, **dadurch gekennzeichnet, daß** die gewindeförmige Vertiefung entgegen der Entlüftungsrichtung des Raums (10) in einer Ringnut (26) mündet

8. Werkzeugmaschine nach Anspruch 3 und einem der Ansprüche 5 bis 7, **dadurch gekennzeichnet, daß** zwischen dem Übersetzungsmittel (20) und einem Lager (28) des rotierend antreibbaren Bauteils (12) ein die Vertiefung radial abdichtender Dichtring (30) angeordnet ist.

## Claims

1. Power tool, in particular a portable hammer drill, comprising a chamber (10) containing lubricant, in which at least one rotationally drivable component (12) is arranged, and comprising a pressure-compensating device (14) for the chamber (10), said pressure-compensating device (14) having a rotationally drivable centrifugal component (16) which screens at least one pressure-compensating passage (18) fluidically connected downstream of it in the venting direction of the chamber (10), the centrifugal component (16) being arranged on the rotationally drivable component in a rotationally fixed manner, **characterized in that** the rotationally drivable component (12) is formed by a shaft, and the centrifugal component (16) adjoins a radially extending transmission means (20) arranged on the shaft.

2. Power tool according to Claim 1, **characterized in that** the centrifugal component (16) is formed by a disc which extends axially towards the transmission means (20) and conically radially outwards.

3. Power tool according to Claim 1 or 2, **characterized in that** the centrifugal component (16) is arranged fluidically upstream of the transmission means (20) in the venting direction of the chamber (10).

4. Power tool according to Claim 2 or 3, **characterized in that,** in the radially outer region of the centrifugal component (16) formed as a disc, at least one recessed portion (22) forming a pressure-compensating passage is incorporated in the centrifugal component (16) and/or in the transmission means (20).

5. Power tool according to one of the preceding claims, **characterized in that** the pressure-compensating passage (18) is formed at least partly by a screw-thread-shaped recess which is covered in a lubricant-tight manner, except for an access (24), screened by the centrifugal component (16), in the chamber (10).

6. Power tool according to Claim 5, **characterized in that** the screw-thread-shaped recess is incorporated in the rotationally drivable component (12) designed as a shaft.

7. Power tool according to Claim 5 or 6, **characterized in that** the screw-thread-shaped recess opens into an annular groove (26) against the venting direction of the chamber (10).

8. Power tool according to Claim 3 and one of claims 5 to 7, **characterized in that** a sealing ring (30) radially sealing the recess is arranged between the transmission means (20) and a bearing (28) of the rotationally drivable component (12).

## Revendications

1. Machine-outil, en particulier perceuse manuelle, comprenant une chambre (10) de lubrifiant, dans laquelle est disposé au moins un composant (12) pouvant être entraîné en rotation, et comprenant un dispositif de compensation de la pression (14) dans la chambre (10), qui présente un composant centrifuge (16) pouvant être entraîné en rotation, qui protège au moins un canal de compensation de la pression (18) monté en aval, du point de vue de la technique des fluides, dans la direction de l'évacuation de la chambre (10), le composant centrifuge (16) étant disposé de manière solidaire en rotation sur le composant pouvant être entraîné en rotation, **caractérisée en ce que** le composant (12) pouvant être entraîné en rotation est formé par un arbre et le composant centrifuge (16) est adjacent à un moyen de démultiplication (20) disposé sur l'arbre et s'étendant dans la direction radiale.

2. Machine-outil selon la revendication 1, **caractérisée en ce que** le composant centrifuge (16) est formé par un disque qui s'étend sous forme conique radialement vers l'extérieur, axialement par rapport au moyen de démultiplication (20).

3. Machine-outil selon la revendication 1 ou 2, **caractérisée en ce que** le composant centrifuge (16) est disposé, du point de vue de la technique des fluides, dans la direction d'évacuation de la chambre (10) avant le moyen de démultiplication (20).

4. Machine-outil selon la revendication 2 ou 3, **caractérisée en ce que**, dans la région radialement extérieure du composant centrifuge (16) réalisé sous forme de disque, au moins un évidement (22) formant un canal de compensation de la pression est pratiqué dans le composant centrifuge (16) et/ou dans le moyen de démultiplication (20).

5. Machine-outil selon l'une quelconque des revendications précédentes, **caractérisée en ce que** le canal de compensation de la pression (18) est formé au moins en partie par un renfoncement en forme d'hélice qui est recouvert de manière étanche au lubrifiant à l'exception d'une entrée (24) protégée par le composant centrifuge (16) dans la chambre (10).

6. Machine-outil selon la revendication 5, **caractérisée en ce que** le renfoncement en forme d'hélice est pratiqué dans le composant (12) pouvant être entraîné en rotation et réalisé sous forme d'arbre.

7. Machine-outil selon la revendication 5 ou 6, **caractérisée en ce que** le renfoncement en forme d'hélice débouche dans une rainure annulaire (26) dans le sens opposé à la direction d'évacuation de la chambre (10).

8. Machine-outil selon la revendication 3 et selon l'une quelconque des revendications 5 à 7, **caractérisée en ce que** l'on dispose entre le moyen de démultiplication (20) et un palier (28) du composant (12) pouvant être entraîné en rotation, une bague d'étanchéité (30) scellant hermétiquement et radialement le renfoncement.
